# EUROPEAN PATENT APPLICATION

(11) **EP 4 668 795 A1**
(43) Date of publication of application: **24.12.2025**
(21) Application number: 23926044.1
(22) Date of filing: 24.11.2023
(51) Int. Cl.: H04W 4/24, H04M 15/00, H04L 12/14, H04W 8/08, H04L 67/1095

(54) **BILLING METHOD AND SYSTEM**

(30) Priority: 03.03.2023 CN 202310256341
(71) Applicant: Huawei Technologies Co., Ltd., Shenzhen, Guangdong 518129 (CN)
(72) Inventor: BAO, Xiande, Shenzhen, Guangdong 518129 (CN)
(74) Representative: Gill Jennings & Every LLP
(86) International application number: PCT/CN2023/134004
(87) International publication number: WO 2024/183350

(57) **Abstract**

This application relates to the field of mobile communication technologies, and discloses a charging method and system. The method includes: A first charging trigger device sends a charging request to a first charging device, where the first charging trigger device and the first charging device are located in a visited area of a user; the first charging device obtains corresponding user account information in response to the charging request, where the user account information in the first charging device is synchronized with user account information stored in a second charging device, and the second charging device is located in a home area of the user; and the first charging device performs charging processing based on the obtained user account information and service usage information. Both a charging device in the home area and a charging device in the visited area store user account information of a terminal device, and the information is synchronized. The charging device in the visited area may directly perform, based on the stored user account information, network charging on service usage information of the terminal device in a roaming state, to improve network charging efficiency.

## Description

This application claims priority to Chinese Patent Application No. 2023102563414, filed with the China National Intellectual Property Administration on March 3, 2023 and entitled "CHARGING METHOD AND SYSTEM", which is incorporated herein by reference in its entirety.

### TECHNICAL FIELD

This application relates to the field of mobile communication technologies, and in particular, to a charging method and system.

### BACKGROUND

When a user uses a terminal device to perform a data service, for example, when the user uses a mobile phone to download a picture or a video, a network operator performs network charging on data network traffic in a process in which the terminal device performs the data service. When the terminal device is in a roaming state, the network operator routes a data service request in a visited (visited) area in which the terminal device is currently located to a home (home) area of the terminal device, and a charging device in the home area performs network charging.

However, when there is a long network distance between the visited area and the home area, a high network latency may be caused during data routing between the two areas, affecting network charging efficiency. In addition, if a network fault, interruption, or the like occurs during data routing, data routing may fail, and network charging cannot be performed. As a result, the user cannot use the data service, affecting user experience.

### SUMMARY

Embodiments of this application provide a charging method and system, so that a charging device in a visited area may directly perform, based on stored user account information, network charging on service usage information of a terminal device in a roaming state, to improve network charging efficiency.

According to a first aspect, this application provides a charging method. The method includes: A first charging trigger device sends a charging request to a first charging device, where the charging request carries user identification information and service usage information, and the first charging trigger device and the first charging device are located in a visited area of a user; the first charging device obtains, in response to the charging request, corresponding user account information based on the user identification information, where the user account information in the first charging device is synchronized with user account information stored in a second charging device, and the second charging device is located in a home area of the user; and the first charging device performs charging processing based on the obtained user account information and the service usage information.

It may be understood that both a charging device in the home area and a charging device in the visited area store user account information of a terminal device and the information is synchronized. When the terminal device roams to the visited area and initiates a data service request, the charging device (the first charging device) in the visited area may directly perform network charging on service usage information in the data service request of the terminal device based on the stored user account information. In comparison with a manner in which a charging request in the visited area is routed to the home area and the charging device (the second charging device) in the home area performs remote charging, because the charging device in the visited area is deployed in the visited area, the charging device in the visited area directly performs charging on the charging request in the visited area, to reduce a network latency caused by a network distance and improve network charging efficiency.

In a possible implementation of the first aspect, the foregoing method further includes: A customer relationship management device determines the user identification information and the user account information of the user; the customer relationship management device determines, based on the user identification information, the home area and the visited area that correspond to the user; the customer relationship management device sends the user account information to the second charging device based on an area identifier of the home area; and the second charging device copies the user account information and sends the user account information to the first charging device.

In a possible implementation of the first aspect, the customer relationship management device determining, based on the user identification information, the home area and the visited area that correspond to the user includes: The customer relationship management device determines at least one second charging device based on the area identifier of the home area; the customer relationship management device determines at least one first charging device based on an area identifier of the visited area; and the customer relationship management device generates a charging device cluster based on the at least one second charging device and the at least one first charging device, where user account information in each charging device in the charging device cluster is synchronized.

In a possible implementation of the first aspect, the first charging device performing charging processing based on the obtained user account information and the service usage information includes: The first charging device updates the user account information in the first charging device based on a charging result of the charging processing; and the first charging device copies updated user account information and sends the updated user account information to a second charging device in the charging device cluster.

In a possible implementation of the first aspect, the first charging trigger device sending the charging request to the first charging device includes: The first charging trigger device receives a first service request from the user located in the visited area, and determines the first charging device based on the area identifier of the visited area; and the first charging trigger device sends the charging request to the first charging device in response to the first service request.

In a possible implementation of the first aspect, the first charging device performing charging processing based on the obtained user account information and the service usage information includes: The first charging device sends the charging result of the charging processing to the first charging trigger device; and the first charging trigger device determines, based on the charging result, a service processing manner corresponding to the first service request.

In a possible implementation of the first aspect, the first charging trigger device sending the charging request to the first charging device includes: A second charging trigger device receives a second service request from the user located in the home area, and determines the second charging device based on the area identifier of the home area, where the second charging trigger device is located in the home area; corresponding to a case in which the second charging device does not meet a charging condition, the second charging trigger device determines the visited area of the user, and determines the first charging trigger device and the first charging device based on the area identifier of the visited area; the second charging trigger device sends the second service request to the first charging trigger device; and the first charging trigger device sends the charging request to the first charging device in response to the second service request.

It may be understood that both the charging device in the home area and the charging device in the visited area update and synchronize the user account information each time after performing network charging. Therefore, when the charging device that is in the visited area or the home area and that is configured to perform network charging has a fault and cannot perform network charging, the charging trigger device in the visited area or the home area may route the charging request to the charging device in the home area or the charging device in the visited area for network charging, to improve network charging feasibility and ensure that the terminal device implements a data service.

According to a second aspect, this application provides another charging method. The method includes: A first charging device receives a charging request sent by a first charging trigger device, where the charging request carries user identification information and service usage information, and the first charging trigger device and the first charging device are located in a visited area of a user; the first charging device obtains, in response to the charging request, corresponding user account information based on the user identification information, where the user account information in the first charging device is synchronized with user account information stored in a second charging device, and the second charging device is located in a home area of the user; and the first charging device performs charging processing based on the obtained user account information and the service usage information.

In a possible implementation of the second aspect, the first charging device performing charging processing based on the obtained user account information and the service usage information includes: The first charging device updates the user account information in the first charging device based on a charging result of the charging processing, and the first charging device copies updated user account information and sends the updated user account information to the second charging device.

In a possible implementation of the second aspect, the foregoing method further includes: The first charging device sends the charging result of the charging processing to the first charging trigger device.

According to a third aspect, this application provides another charging method. The method includes: A first charging trigger device receives a first service request from a user located in a visited area, and determines a first charging device based on an area identifier of the visited area, where the first charging trigger device and the first charging device are located in the visited area of the user; and the first charging trigger device sends a charging request to the first charging device in response to the first service request.

In a possible implementation of the third aspect, the foregoing method further includes: The first charging trigger device receives, from the first charging device, a charging result corresponding to the charging request; and the first charging trigger device determines, based on the charging result, a service processing manner corresponding to the first service request.

According to a fourth aspect, this application provides another charging method. The method includes: A second charging trigger device receives a second service request from a user located in a home area, and determines a second charging device based on an area identifier of the home area, where the second charging trigger device and the second charging device are located in the home area; corresponding to a case in which the second charging device does not meet a charging condition, the second charging trigger device determines a visited area of the user, and determines a first charging trigger device and a first charging device based on an area identifier of the visited area, where the first charging trigger device and the first charging device are located in the visited area of the user; and the second charging trigger device sends the second service request to the first charging trigger device, to trigger the first charging trigger device to send a charging request to the first charging device.

According to a fifth aspect, this application provides a charging management method. The method includes: A customer relationship management device determines user identification information and user account information of a user; the customer relationship management device determines a home area and a visited area that correspond to the user based on the user identification information; the customer relationship management device determines at least one second charging device based on an area identifier of the home area, where the second charging device is located in the home area; the customer relationship management device determines at least one first charging device based on an area identifier of the visited area, where the first charging device is located in the visited area; the customer relationship management device generates a charging device cluster based on the at least one second charging device and the at least one first charging device; and the customer relationship management device sends the user account information to at least one charging device in the charging device cluster, where user account information in each charging device in the charging device cluster is synchronized.

It may be understood that when a terminal device initiates a network registration request, the customer relationship management device determines a home area and a non-home area of the terminal device, and determines the non-home area as the visited area. The customer relationship management device obtains a charging device in the home area and a charging device in the visited area, generates a charging device cluster based on each charging device, and synchronizes user account information of the terminal device to each charging device in the charging device cluster, so that both the charging device in the home area and the charging device in the visited area store the user account information of the terminal device.

According to a sixth aspect, this application provides a charging system, used in any one of the foregoing methods. The system includes: an information storage module, configured to store user account information; a charging processing module, configured to perform charging processing based on the user account information and service usage information; and an information synchronization module, configured to perform information synchronization with each charging device included in a charging device cluster.

According to a seventh aspect, an embodiment of this application provides a readable storage medium. The readable storage medium stores instructions, and when the instructions are executed by a device, the device is enabled to implement any charging method provided in the first aspect and various possible implementations of the first aspect.

According to an eighth aspect, an embodiment of this application provides a device. The device includes: a memory, configured to store instructions executed by one or more processors of the device; and a processor, one of the processors of the device and configured to execute the instructions stored in the memory, to implement any charging method provided in the first aspect and various possible implementations of the first aspect.

According to a ninth aspect, an embodiment of this application provides a program product. The program product includes instructions, and when the instructions are executed by a device, the device is enabled to implement any charging method provided in the first aspect and various possible implementations of the first aspect.

### BRIEF DESCRIPTION OF DRAWINGS

FIG. 1A is a scenario diagram of a charging scenario 10A according to some embodiments of this application;
FIG. 1B is a scenario diagram of a charging scenario 10B according to some embodiments of this application;
FIG. 2 is a scenario diagram of a charging scenario 20 according to some embodiments of this application;
FIG. 3 is a diagram of a 5G architecture 30 according to some embodiments of this application;
FIG. 4A is a communication interaction flowchart in a roaming scenario according to some embodiments of this application;
FIG. 4B is a communication interaction flowchart in a non-roaming scenario according to some embodiments of this application;
FIG. 5A is a diagram of a structure of a charging system according to some embodiments of this application;
FIG. 5B is a diagram of a module of a charging system 50 according to some embodiments of this application; and
FIG. 6 is a diagram of a structure of a mobile phone 100 according to some embodiments of this application.

### DESCRIPTION OF EMBODIMENTS

Illustrative embodiments of this application include but are not limited to a charging method and system.

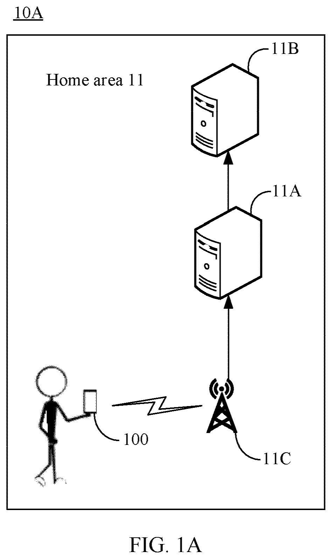

The following describes the technical solutions of this application with reference to FIG. 1A to FIG. 6.

When a user uses a terminal device to perform a data service, for example, when the user uses a mobile phone to download a picture or a video, the terminal device initiates a data service request to a network operator. After receiving the data service request from the terminal device, the network operator performs network charging on a data network requested in the data service request of the terminal device. The network operator determines, based on a charging result of the network charging, whether to provide the data service for the terminal device.

For example, the user needs 2 gigabytes (gigabyte, GB) of data network traffic to download a video by using the mobile phone, and a fee of the 2 GB data network traffic is 1 yuan. The network operator receives, from the mobile phone, a data service request for downloading the video, and determines, based on service usage information of the 2 GB data network traffic in the data service request, that a fee of network charging is 1 yuan, and the network operator should deduct a call fee of 1 yuan from the mobile phone. If a call fee balance of the mobile phone meets the deduction of the call fee of 1 yuan, for example, if the call fee balance of the mobile phone is greater than or equal to 1 yuan, the network operator deducts the call fee of 1 yuan from the mobile phone and provides the data service of downloading the video for the mobile phone, that is, provides the 2 GB data network traffic for the mobile phone. If the call fee balance of the mobile phone does not meet the deduction of the call fee of 1 yuan, for example, if the call fee balance of the mobile phone is less than 1 yuan, the network operator refuses to provide the data service of downloading the video for the mobile phone.

In some embodiments, a data network of the network operator is usually deployed by area, and a corresponding charging device is deployed in each area. For service data requests initiated by the terminal device in different areas, network charging is performed by different charging devices in different areas. For example, for area deployment, a home area and a non-home area may be divided based on an area in which a network with which the terminal device is registered is located, and the non-home area is used as a visited area. It should be understood that the home area indicates the area in which the network with which the terminal is registered is located, and the visited area indicates an area in which a network with which a non-terminal device is registered is located. For example, if a registration place of a subscriber identity module (subscriber identity module, SIM) card of a mobile phone is an area A, the area A is used as a home area of the mobile phone, and an area such as an area B or an area C other than the area A is used as a visited area of the mobile phone. It should be understood that the visited area may include a plurality of areas, for example, areas such as the area B and the area C other than the area A, and each area has a different charging device corresponding to the area.

In some embodiments, a data network that is of the network operator and that corresponds to the home area may be referred to as a home network (home network), which is referred to as a home network for short below; and a data network that is of the network operator and that corresponds to the visited area may be referred to as a visited network (visited network), which is referred to as a visited network for short below.

The following describes some embodiments of this application by using an example in which one charging device is deployed in each of a visited area and a home area.

FIG. 1A is a diagram of a non-roaming charging scenario 10A according to some embodiments of this application. As shown in FIG. 1A, the charging scenario 10A includes a charging trigger device 11A, a charging device 11B, and an access device 11C that belong to a home network in a home area 11. In some embodiments, the charging trigger device, the charging device, and the access device may be configured to implement functions such as communication, charging trigger, and charging of the foregoing network operator. The following describes the functions, and details are not described herein.

As shown in FIG. 1A, when a user uses a mobile phone 100 to perform a data service in the home area 11, the mobile phone 100 accesses the home network in the home area 11 through the access device 11C, to request the data service from the home network. The charging trigger device 11A of the home network generates service usage information based on data network traffic in the data service requested by the mobile phone 100 when accessing the home network. The charging trigger device 11A determines that a home location of the mobile phone 100 is the home area 11 based on user identification information of the mobile phone 100. For example, the charging trigger device 11A determines that a home location of the user is the home area 11 based on the user identification information (for example, a generic public subscription identifier (generic public subscription identifier, GPSI) or a subscription permanent identifier (subscription permanent identifier, SUPI) of the mobile phone 100). The charging trigger device 11A triggers a charging request to the charging device 11B of the home network based on the service usage information and the user identification information, and the charging device 11B of the home network performs network charging on a data service request of the mobile phone 100.

It may be understood that a network with which the mobile phone 100 is registered is located in the home area 11. In some embodiments, when the mobile phone 100 initiates a registration request to the home network in the home area 11, a customer relationship management (customer relationship management, CRM) device of the network operator usually separately stores user account information of the mobile phone 100 in the charging device 11B of the home network. For example, the customer relationship management device separately stores the user account information such as an account identifier and balance information of the mobile phone 100 in the charging device 11B. It should be understood that the charging device 11B may perform network charging on the data service request of the mobile phone 100 based on the stored user account information and the service usage information such as a service type and data usage that are carried in the data service request.

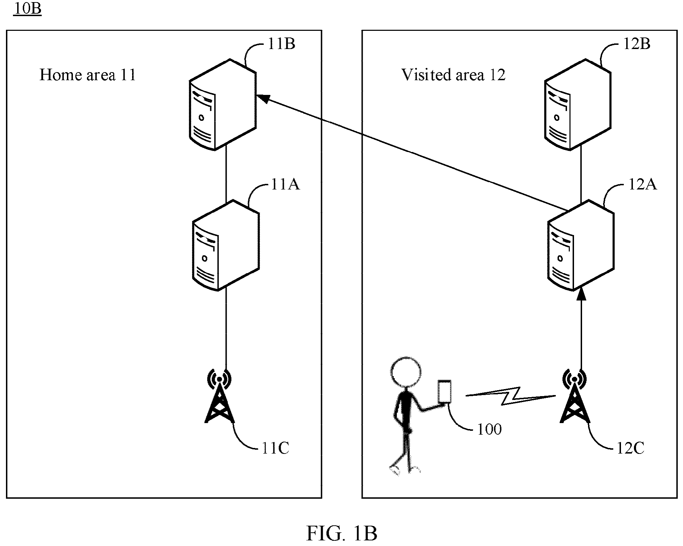

FIG. 1B is a diagram of a roaming charging scenario 10B according to some embodiments of this application. As shown in FIG. 1B, the charging scenario 10B includes a charging trigger device 11A, a charging device 11B, and an access device 11C that belong to a home network in a home area 11, and a charging trigger device 12A, a charging device 12B, and an access device 12C that belong to a visited network in a visited area 12.

As shown in FIG. 1B, when a user roams from the home area 11 to the visited area 12 and uses a mobile phone 100 to perform a data service, the mobile phone 100 is in a roaming state. For example, when the user carries the mobile phone 100 on which a SIM card of an area A is installed and roams from the area A to an area B, the mobile phone 100 accesses the visited network in the visited area 12 through the access device 12C, to request the data service from the visited network. The charging trigger device 12A of the visited network generates service usage information based on data network traffic in the data service requested by the mobile phone 100 when accessing the visited network. The charging trigger device 12A determines that a home location of the mobile phone 100 is the home area 11 (the area A) based on user identification information of the mobile phone 100. The charging trigger device 12A triggers a charging request to the charging device 11B of the home network based on the service usage information and the user identification information, and the charging device 11B of the home network performs network charging on a data service request of the mobile phone 100.

It may be understood that, when the user roams from the home area 11 (the area A) to the visited area 12 (the area B) and uses the mobile phone 100 to perform the data service, because the charging device 12B of the visited network does not store user account information of the mobile phone 100, the charging device 12B cannot perform network charging on the mobile phone 100. The charging trigger device 12A can trigger the charging request only to the charging device 11B of the home network, and the charging device 11B that stores the user account information of the mobile phone 100 performs network charging on the data service request of the mobile phone 100.

As described above, when the terminal device is in the roaming state, the charging trigger device 12A of the visited network triggers the charging request to the charging device 11B of the home network, and the charging device 11B of the home network performs network charging. In some embodiments, when there is a long network distance between the visited area and the home area, a high network latency may be caused during data routing between the two areas, affecting network charging efficiency. In some other embodiments, if a network fault, interruption, or the like occurs during data routing, data routing may fail, and network charging cannot be performed. As a result, the user cannot use the data service, affecting user experience.

Therefore, this application provides a charging method. The method includes: When a terminal device initiates a network registration request, the customer relationship management device determines a home area and a non-home area of the terminal device, and determines the non-home area as a visited area. The customer relationship management device obtains a charging device in the home area and a charging device in the visited area, generates a charging device cluster based on each charging device, and synchronizes user account information of the terminal device to each charging device in the charging device cluster, so that both the charging device in the home area and the charging device in the visited area store the user account information of the terminal device. When the terminal device roams to the visited area and initiates a data service request, the charging device in the visited area may directly perform network charging on the data service request of the terminal device based on the stored user account information. It should be understood that, in comparison with a manner in which a charging request in the visited area is routed to the home area and the charging device in the home area performs remote charging, because the charging device in the visited area is deployed in the visited area, the charging device in the visited area directly performs charging on the charging request in the visited area, to reduce the network latency caused by the network distance and improve the network charging efficiency.

In some embodiments, each time after the charging device in the visited area performs network charging on the data service request initiated by the terminal device, the charging device in the visited area copies a charging result of each time of network charging and sends the charging result to the charging device in the home area based on the charging device cluster, so that account information stored in the charging device in the home area is synchronized with that stored in the charging device in the visited area. Alternatively, each time after the charging device in the home area performs network charging on the data service request initiated by the terminal device, the charging device in the home area copies a charging result of each time of network charging and sends the charging result to the charging device in the visited area based on the charging device cluster, so that account information stored in the charging device in the home area is synchronized with that stored in the charging device in the visited area. It should be understood that both the charging device in the home area and the charging device in the visited area update and synchronize the user account information each time after performing network charging. Therefore, when the charging device that is in the visited area or the home area and that is configured to perform network charging has a fault and cannot perform network charging, a charging trigger device in the visited area or the home area may route the charging request to the charging device in the home area or the charging device in the visited area for network charging, to improve network charging feasibility and ensure that the terminal device implements the data service.

For ease of understanding the technical solutions of this application, the following describes, according to some embodiments of this application, the charging trigger device, the charging device, and the access device that are used by the foregoing network operator to implement functions such as communication, registration, and charging.

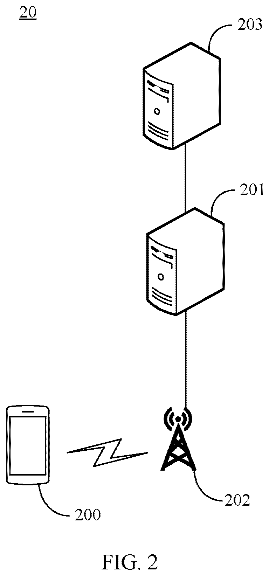

FIG. 2 is a diagram of a charging scenario 20 according to some embodiments of this application. As shown in FIG. 2, the charging scenario 20 includes a charging trigger device 201, an access device 202, a charging device 203, and a terminal device 200. It should be understood that the terminal device 200 is communicatively connected to the charging trigger device 201 through the access device 202. The charging device 203 is communicatively connected to the charging trigger device 201. The charging trigger device 201 triggers a charging request to the charging device 203 based on a data service request initiated by the terminal device 200, the charging device 203 performs network charging on service usage information in the data service request, and the charging trigger device 201 determines, based on a charging result of the charging device 203, whether to provide a data service for the terminal device 200.

In some embodiments, the charging trigger device 201 may be any server or functional entity configured to trigger the charging request to the charging device 203. For example, the charging trigger device 201 may be a session management function (session management function, SMF) network element or a charging trigger function (charging trigger function CTF).

In some embodiments, the charging device 203 may be any server or functional entity configured to perform charging processing on the service usage information in a data service requested by the terminal device 200. For example, the charging device 203 may be an online charging system (online charging system, OCS) or a converged charging system (converged charging system, CCS). Alternatively, the charging device 203 may be a charging function (charging function, CHF) network element. This is not specifically limited.

In some embodiments, the access device 202 may be any device used by the terminal device 200 to access a home network or a visited network. For example, the access device 202 may be a base station, a broadband network service gateway (broadband network gateway, BNG), an aggregation switch, a 3rd generation partnership project (3rd generation partnership project, 3GPP) access device, or a radio access network (radio access network, RAN) access device. This is not specifically limited.

In some embodiments, the terminal device 200 may be any device configured to implement a wireless communication function. For example, the terminal device 200 may be a user equipment (user equipment, UE), an access terminal, a terminal unit, a terminal station, a mobile station, a remote station, a remote terminal, a mobile device, a wireless communication device, a terminal agent, or a terminal apparatus in a 5th generation mobile communication technology (5th generation, 5G) network or a future evolved PLMN. The access terminal may be a cellular phone, a cordless telephone, a session initiation protocol (session initiation protocol, SIP) phone, a wireless local loop (wireless local loop, WLL) station, a personal digital processing (personal digital assistant, PDA), a handheld device having a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in transportation safety, a wireless terminal in a smart city, a wireless terminal in a smart home, or the like. This is not specifically limited.

In some embodiments, the home network or the visited network provided by the network operator may correspond to a 5G core network (5th generation core, 5GC) in a 5G system architecture, an evolved packet core (evolved packet core, EPC) in a 4th generation mobile communication technology (4th generation, 4G) system architecture, a core network in a 3G/6G system architecture, or the like. This is not specifically limited.

The following describes some embodiments of this application with reference to the roaming scenario of the terminal device and by using the 5G system architecture as an example.

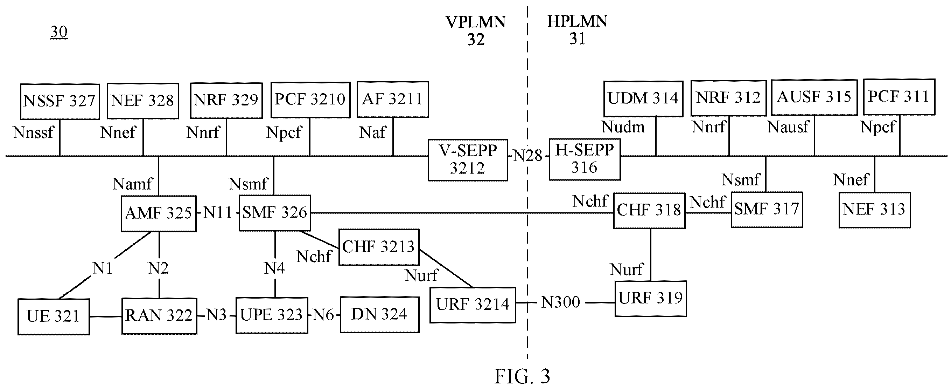

FIG. 3 is a diagram of a 5G architecture 30 according to some embodiments of this application. As shown in FIG. 3, the 5G architecture 30 includes a home public land mobile network (home public land mobile network, HPLMN) 31 and a visited public land mobile network (visited public land mobile network, VPLMN) 32.

In some embodiments, the VPLMN 32 includes a UE 321, a RAN network element 322, a user plane function (user plane function, UPF) network element 323, a data network (data network, DN) network element 324, an AMF network element 325, an SMF network element 326, a network slice selection function (network slice selection function, NSSF) network element 327, a visited network exposure function (network exposure function, NEF) network element 328, an NRF network element 329, a policy control entity (policy control function, PCF) network element 3210, an application function (application function, AF) network element 3211, a visited security edge protection proxy (visited security edge protection proxy, V-SEPP) 3212, a CHF network element 3213, and a user routing function (user routing function, URF) network element 3214.

In some embodiments, the HPLMN 31 includes a PCF network element 311, an NRF network element 312, an NEF network element 313, a unified data management (unified data management, UDM) network element 314, an authentication server function (authentication server function, AUSF) network element 315, a home security edge protection proxy (home security edge protection proxy, H-SEPP) 316, an SMF network element 317, a CHF network element 318, and a URF network element 319.

As shown in FIG. 3, the UE 321 communicates with the AMF network element 325 through an N1 interface (N1 for short). The RAN network element 322 communicates with the AMF network element 325 through an N2 interface (N2 for short). The RAN network element 322 communicates with the UPF network element 323 through an N3 interface (N3 for short). The SMF network element 326 communicates with the UPF network element 323 through an N4 interface (N4 for short). The UPF network element 323 communicates with the DN network element 324 through an N6 interface (N6 for short). The AMF network element 325 communicates with the SMF network element 326 through an N11 interface (N11 for short).

In some embodiments, the AMF network element 325, the SMF network element 326/317, the NEF network element 328/313, the NRF network element 329/312, the PCF network element 3210/311, the AF network element 3211, the NSSF network element 327, the CHF network element 3213/318, the UDM network element 314, the AUSF network element 315, and the URF network element 3214/319 interact with each other through a service-oriented interface. For example, an external service-oriented interface provided by the AMF network element 325 may be Namf. An external service-oriented interface provided by the SMF network element 326/317 may be Nsmf. An external service-oriented interface provided by the NEF network element 328/313 may be Nnef. An external service-oriented interface provided by the NRF network element 329/312 may be Nnrf. An external service-oriented interface provided by the PCF network element 3210/311 may be Npcf. An external service-oriented interface provided by the AF network element 3211 may be Naf. An external service-oriented interface provided by the NSSF network element 327 may be Nnssf. An external service-oriented interface provided by the CHF 3213/318 may be Nchf. An external service-oriented interface provided by the UDM network element 314 may be Nudm. An external service-oriented interface provided by the AUSF network element 315 may be Nausf. An external service-oriented interface provided by the URF 3214/319 may be Nurf.

In some embodiments, the VPLMN 32 and the HPLMN 31 communicate with each other through the H-SEPP 316 and the V-SEPP 3212. The H-SEPP 316 and the V-SEPP 3212 communicate with each other through an N28 interface (N28 for short). The URF network element 319 communicates with the network element 3214 through an N300 interface (N300 for short).

In some embodiments, as shown in FIG. 1B and FIG. 3, the mobile phone 100 may be understood as an example of the UE 321, the RAN network element 322 may be understood as an example of a functional entity used by the access device 12C of the visited network to implement a function of accessing the visited network by the UE 321, the SMF network element 326 may be understood as an example of a functional entity of the charging trigger device 12A of the visited network, the CHF network element 3213 may be understood as an example of a functional entity of the charging device 12B of the visited network, the SMF network element 326 may be understood as an example of a functional entity of the charging trigger device 12A of the visited network, and the CHF network element 3213 may be understood as an example of a functional entity of the charging device 12B of the visited network. The SMF network element 317 may be understood as an example of a functional entity of the charging trigger device 11A of the home network, and the CHF network element 318 may be understood as an example of a functional entity of the charging device 11B of the home network.

It may be understood that, as shown in FIG. 1B and FIG. 3, the UPF 323 of the visited network sends, to the SMF 326 of the visited network, data network traffic used by the UE 321 to access the visited network via the RAN 322. The SMF 326 of the visited network generates service usage information based on the data network traffic that is sent by the UPF 323 of the visited network and that is used by the UE 321 to access the visited network, and determines the CHF 318 of the home network of the UE 321 based on user identification information of the UE 321. The SMF 326 of the visited network triggers a charging request to the CHF 318 of the home network based on the service usage information and the user identification information. The CHF 318 of the home network performs charging processing on the service usage information based on the charging request. For example, the CHF 318 generates a roaming charging data record (charging data record, CDR) for the UE 321 in the roaming scenario. The CHF 318 generates a roaming detailed data record (detailed data record, DDR) based on the roaming CDR of the UE 321, and generates usage data report (usage data report, UDR) information of a user based on the DDR of the UE 321.

It may be understood that the SMF 326 of the visited network interworks with the CHF 318 of the home network, and is configured to perform charging processing on the service usage information of the UE 321 in the visited network, and update roaming charging configuration information of the user.

It may be understood that the RAN network element, the AMF network element, the SMF network element, the UDM network element, the UPF network element, the PCF network element, and the like shown in FIG. 3 are merely names, and the names do not constitute a limitation on the entities. In the 5G network or another network such as a 4G or 3G network, network elements or functional entities corresponding to the RAN network element, the AMF network element, the SMF network element, the UDM network element, the UPF network element, and the PCF network element may alternatively have other names. For example, the UDM network element may be replaced by a home subscriber server (home subscriber server, HSS), a user subscription database (user subscription database, USD), or a database entity. This is not specifically limited.

It may be understood that the 5G architecture 30 shown in FIG. 3 is merely an example of one UPF network element, one SMF network element, and the like. In some other embodiments, the 5G architecture 30 shown in FIG. 3 may further include a plurality of UPF network elements, a plurality of SMF network elements, another network element, or the like. For example, the HPLMN 31 may further include a RAN network element and an AMF network element. This is not specifically limited.

In some embodiments, as shown in FIG. 3, before the UE 321 performs a data service, the UE 321 needs to initiate network registration to the home network. For example, the UE 321 sends a registration request (registration request) to the home network through the RAN network element (not shown in FIG. 3) of the HPLMN 31, where the registration request carries registration information such as user identification information, user account information, and a charging device cluster relationship. It should be understood that, the user identification information indicates an SUPI, a GPSI, and the like of the UE 321, the user account information indicates charging rule information, device balance information, and the like of the UE 321, and the charging device cluster relationship indicates an association relationship between a charging device that is of the UE 321 and that belongs to the HPLMN 31 and a charging device that belongs to the VPLMN 32, for example, the CHF 318 and the CHF network element 3213 are associated with each other, the CHF 318 belongs to the HPLMN 31, and the CHF network element 3213 belongs to the VPLMN 32. After the AMF network element (not shown in FIG. 3) of the HPLMN 31 receives the registration request of the UE 321, the AMF network element invokes an Nnrf interface to register the registration information with the NRF network element 312, that is, the UE 321 completes network registration.

It may be understood that, based on a location of a network with which the UE 321 is registered, an area of the HPLMN 31 is used as a home area of the UE 321, and an area of the VPLMN 32 is used as a visited area of the UE 321.

In some embodiments, after the UE 321 completes network registration, the URF network element 319 that belongs to the HPLMN 31 obtains and stores the registration information, and the URF network element 319 copies the registration information of the UE 321 and sends, through N300, the registration information to the URF network element 3214 that belongs to the VPLMN 32. It should be understood that, because both the URF network element 319 that belongs to the HPLMN 31 and the URF network element 3214 that belongs to the VPLMN 32 store the registration information of the UE 321, the CHF network element 318/3213 may implement, by obtaining the registration information from the URF network element 319/3214, a network charging function when the UE 321 initiates a data service request.

It may be understood that, when the UE 321 is in the home area or roams to the visited area, the CHF network element 318 or the CHF network element 3213 may directly perform network charging on a local service data request in the home area or the visited area.

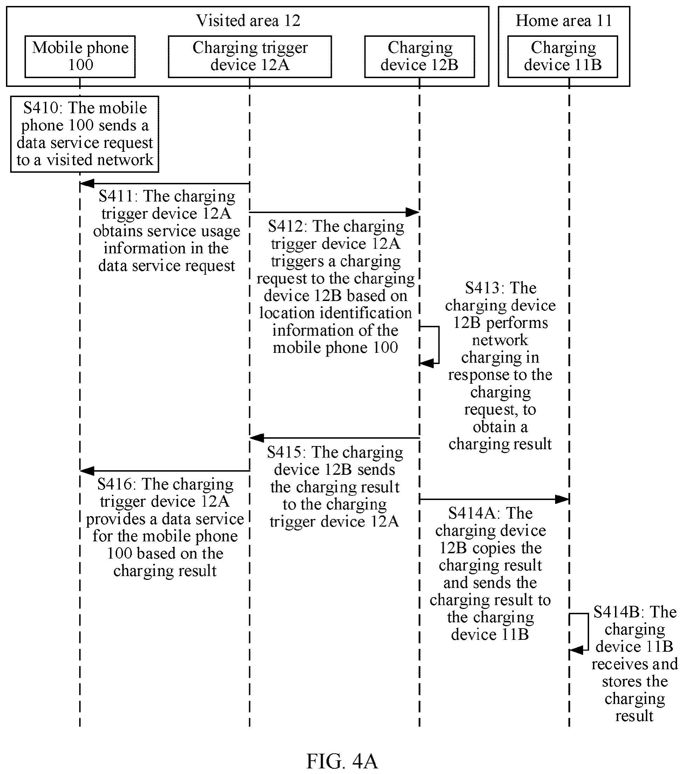

FIG. 4A is a communication interaction flowchart in a roaming scenario according to some embodiments of this application. As shown in FIG. 4A, the following steps are included.

S410: A mobile phone 100 initiates a data service request to a visited network.

In some embodiments, when a user uses the mobile phone 100 to perform a data service in a visited area 12, for example, when the user uses the mobile phone 100 to perform a data service of downloading a video, the mobile phone 100 accesses the visited network in the visited area 12 through an access device in a home area 12, to initiate a data service request to the visited network. It may be understood that the data service request carries user identification information of the mobile phone 100, for example, a GPSI or an SUPI, service usage information, for example, a service type (for example, a type of data network traffic) and data usage (for example, 2 GB), and location identifier information, for example, a cell identifier and a network identifier.

S411: A charging trigger device 12A obtains the service usage information in the data service request.

In some embodiments, the charging trigger device 12A of the visited network may determine a home area and a visited area of the mobile phone 100 based on the user identification information of the mobile phone 100, and may determine, based on the location identifier information of the mobile phone 100, a location of an area in which the mobile phone 100 is currently located, for example, the visited area 12. The charging trigger device 12A generates a charging request based on the service usage information and the user identification information in the data service request, and sends the charging request to a charging device in a corresponding location area based on the location identifier information.

S412: The charging trigger device 12A triggers the charging request to a charging device 12B based on the location identifier information of the mobile phone 100.

In some embodiments, the charging trigger device 12A determines, based on the location identifier information in the data service request of the mobile phone 100, that the location area in which the mobile phone 100 is located is the visited area 12, and queries for the charging device 12B of the visited network in the visited area 12. The charging trigger device 12A sends the charging request to the charging device 12B of the visited network. If the charging trigger device 12A, for example, an SMF network element of a home network, determines, based on location identifier information of a UE, that the UE is located in a home area, the SMF network element of the home network triggers a charging request to a CHF network element of the home network.

S413: The charging device 12B performs network charging in response to the charging request, to obtain a charging result.

In some embodiments, in response to the charging request, the charging device 12B obtains user account information corresponding to the mobile phone 100 based on the user identification information in the charging request, and performs network charging on the service usage information in the data service request of the mobile phone 100 based on the user account information, to obtain the charging result. For example, if a fee of 2 GB data network traffic is 1 yuan, the charging device 12B obtains a charging result of deducting 1 yuan from a call fee balance of the mobile phone 100. For example, the CHF network element queries stored user account information for the user account information corresponding to the mobile phone 100 based on the GPSI or the SUPI of the mobile phone 100, and performs network charging on the data service request of the mobile phone 100 based on the user account information and the service usage information.

In some embodiments, the charging device 12B updates, based on the charging result, the user account information stored in the charging device 12B. For example, before the charging device 12B performs network charging, the call fee balance in the user account information of the mobile phone 100 is 10 yuan. After the charging device 12B performs network charging, the charging device 12B updates the call fee balance in the user account information to 9 yuan based on the charging result of deducting 1 yuan from the call fee balance.

S414A: The charging device 12B copies the charging result and sends the charging result to a charging device 11B.

In some embodiments, the charging device 12B copies the charging result, and sends the charging result to each charging device, for example, the charging device 11B, in a charging device cluster. For example, the CHF network element routes the charging result to each charging device in the charging device cluster through a URF network element, so that user account information stored in each charging device in the charging device cluster is synchronized.

S414B: The charging device 11B receives and stores the charging result.

In some embodiments, the charging device 11B receives the charging result sent by the charging device 12B. The charging device 11B updates user account information in the charging device 11B based on the charging result.

In some other embodiments, when the charging device 12B has a fault due to network interruption or the like and cannot perform network charging, the charging trigger device 12A may query for a charging trigger device 11A and the charging device 11B in a home area 11 of the mobile phone 100. The charging trigger device 12A routes the charging request to the charging device 11B, and the charging device 11B in the home area 11 performs network charging on the charging request in the visited area 12, to ensure network charging feasibility, and avoid a case in which a data service cannot be provided for a user because the local charging device has a fault and cannot perform charging.

It may be understood that each charging device in the charging device cluster synchronizes a charging result to each charging device in the charging device cluster each time after completing charging, so that user account information stored in each charging device is synchronized. When a charging device that is in the visited area or the home area and that is configured to perform network charging has a fault and cannot perform network charging, a network operator may route a data service request to a charging device in the home area or a charging device in the visited area for network charging, to improve network charging feasibility and ensure that the terminal device implements a data service.

S415: The charging device 12B sends the charging result to the charging trigger device 11A.

In some embodiments, the charging device 12B sends the charging result to the charging trigger device 11A, so that the charging trigger device 11A determines, based on the charging result, a service processing policy corresponding to the data service request of the mobile phone 100. For example, the CHF network element returns the charging result to the SMF network element.

S416: The charging trigger device 11A provides a data service for the mobile phone 100 based on the charging result.

In some embodiments, the charging trigger device 11A determines the service processing policy for the data service request of the mobile phone 100 based on the charging result of the charging device 11B. For example, if the call fee balance of the mobile phone meets the deduction of the call fee of 1 yuan, for example, if the call fee balance of the mobile phone is greater than or equal to 1 yuan, the network operator deducts the call fee of 1 yuan from the mobile phone and provides the data service of downloading the video for the mobile phone, that is, provides the 2 GB data network traffic for the mobile phone. Alternatively, for example, if the call fee balance of the mobile phone does not meet the deduction of the call fee of 1 yuan, for example, if the call fee balance of the mobile phone is less than 1 yuan, the network operator refuses to provide the data service of downloading the video for the mobile phone. For example, the SMF network element returns the charging result to an AMF network element, and the AMF network element determines, based on the charging result, the service processing policy corresponding to the data service request of the mobile phone 100.

It may be understood that, in comparison with a manner in which the network operator routes a data service request in the visited area to the home area and the charging device in the home area performs remote charging, because the charging device in the visited area is deployed in the visited area, the charging device in the visited area directly performs charging on the data service request in the visited area, to reduce a network latency caused by a network distance and improve network charging efficiency.

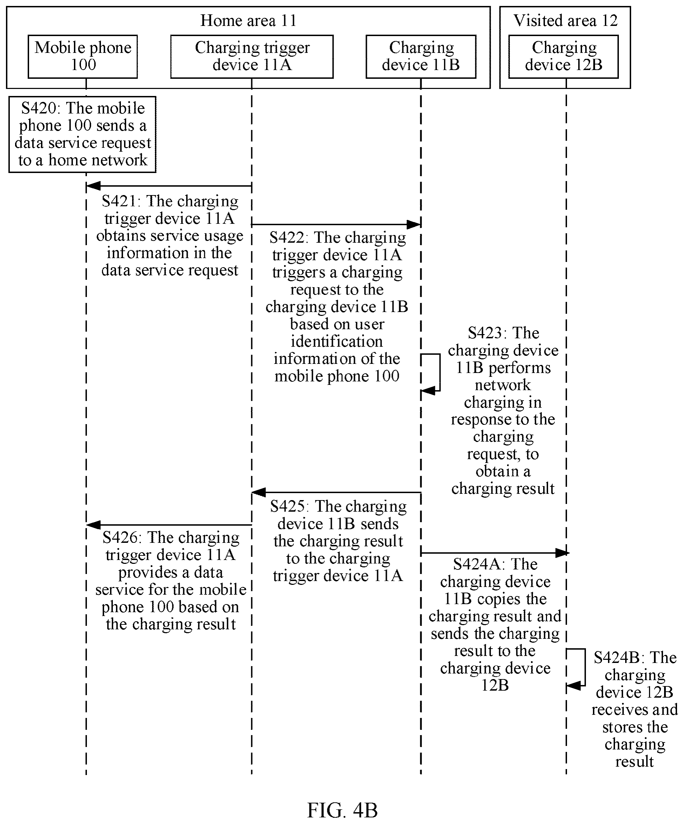

FIG. 4B is a communication interaction flowchart in a non-roaming scenario according to some embodiments of this application. As shown in FIG. 4B, the following steps are included.

S420: A mobile phone 100 initiates a data service request to a home network.

In some embodiments, when a user uses the mobile phone 100 to perform a data service in a home area 11, for example, when the user uses the mobile phone 100 to perform a data service of downloading a video, the mobile phone 100 accesses the home network in the home area 11 through an access device in the home area 11, to initiate the data service request to the home network. It may be understood that the data service request carries user identification information of the mobile phone 100, for example, a GPSI or an SUPI, and service usage information, for example, a service type (for example, a type of data network traffic) and data usage (for example, 2 GB).

S421: A charging trigger device 11A obtains the service usage information in the data service request.

In some embodiments, the charging trigger device 11A of the home network may determine a home area and a visited area of the mobile phone 100 based on the user identification information of the mobile phone 100. The charging trigger device 11A generates a charging request based on the service usage information and the user identification information in the data service request, and sends the charging request to a charging device in the home area 11 of the mobile phone 100 based on the user identification information.

S422: The charging trigger device 11A triggers the charging request to a charging device 11B based on the user identification information of the mobile phone 100.

In some embodiments, the charging trigger device 11A determines that the home area of the mobile phone 100 is the home area 11 based on the user identification information in the data service request of the mobile phone 100, and queries for the charging device 11B of the visited network in the home area 11. The charging trigger device 11A sends the charging request to the charging device 11B of the home network.

S423: The charging device 11B performs network charging in response to the charging request, to obtain a charging result.

In some embodiments, in response to the charging request, the charging device 11B obtains user account information corresponding to the mobile phone 100 based on the user identification information in the charging request, and performs network charging on the service usage information in the data service request of the mobile phone 100 based on the user account information, to obtain the charging result. For example, if a fee of 2 GB data network traffic is 1 yuan, the charging device 11B obtains a charging result of deducting 1 yuan from a call fee balance of the mobile phone 100.

In some embodiments, the charging device 11B updates, based on the charging result, user account information stored in the charging device 11B. For example, before the charging device 11B performs network charging, the call fee balance in the user account information of the mobile phone 100 is 10 yuan. After the charging device 11B performs network charging, the charging device 11B updates the call fee balance in the user account information to 9 yuan based on the charging result of deducting 1 yuan from the call fee balance.

S424A: The charging device 11B copies the charging result and sends the charging result to a charging device 12B.

In some embodiments, the charging device 11B copies the charging result, and sends the charging result to each charging device, for example, the charging device 12B, in a charging device cluster, so that user account information stored in each charging device in the charging device cluster is synchronized.

S424B: The charging device 12B receives and stores the charging result.

In some embodiments, the charging device 12B receives the charging result sent by the charging device 11B. The charging device 12B updates user account information in the charging device 12B based on the charging result.

In some other embodiments, when the charging device 11B has a fault due to network interruption or the like and cannot perform network charging, the charging trigger device 11A may query for a charging trigger device 12A and the charging device 12B in a visited area 12 of the mobile phone 100. The charging trigger device 11A routes the charging request to the charging device 12B, and the charging device 12B in the visited area 12 performs network charging on the charging request in the home area 11, to ensure network charging feasibility, and avoid a case in which a data service cannot be provided for a user because the local charging device has a fault and cannot perform charging.

It may be understood that each charging device in the charging device cluster synchronizes a charging result to each charging device in the charging device cluster each time after completing charging, so that user account information stored in each charging device is synchronized. When a charging device that is in the visited area or the home area and that is configured to perform network charging has a fault and cannot perform network charging, a network operator may route a data service request to a charging device in the home area or a charging device in the visited area for network charging, to improve network charging feasibility and ensure that the terminal device implements a data service.

S425: The charging device 11B sends the charging result to the charging trigger device 12A.

In some embodiments, the charging device 11B sends the charging result to the charging trigger device 12A, so that the charging trigger device 12A determines, based on the charging result, a service processing policy corresponding to the data service request of the mobile phone 100.

S426: The charging trigger device 12A provides a data service for the mobile phone 100 based on the charging result.

In some embodiments, the charging trigger device 12A determines the service processing policy for the data service request of the mobile phone 100 based on the charging result of the charging device 12B. For example, if the call fee balance of the mobile phone meets the deduction of the call fee of 1 yuan, for example, if the call fee balance of the mobile phone is greater than or equal to 1 yuan, the network operator deducts the call fee of 1 yuan from the mobile phone and provides the data service of downloading the video for the mobile phone, that is, provides the 2 GB data network traffic for the mobile phone. Alternatively, for example, if the call fee balance of the mobile phone does not meet the deduction of the call fee of 1 yuan, for example, if the call fee balance of the mobile phone is less than 1 yuan, the network operator refuses to provide the data service of downloading the video for the mobile phone.

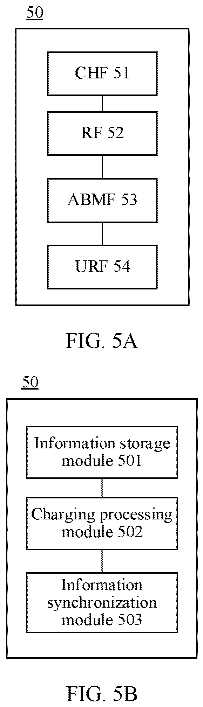

FIG. 5A is a diagram of a structure of a charging system 50 according to some embodiments of this application. As shown in FIG. 5A, the charging system 50 includes a CHF network element 51, a rating function (rating function, RF) network element 52, an account balance management function (account balance management function, ABMF) network element 53, and a URF network element 54.

In some embodiments, the CHF network element 51 is configured to receive a charging request sent by an SMF network element, generate a CDR, implement functions such as sorting, combination, filtering, decoding, routing, and delivering of the charging data record, and forward the CDR to an account domain (billing domain, BD) through Bx.

In some embodiments, the RF network element 52 is configured to receive charging event details provided by the CHF, determine charging information such as service usage information and user identification information, and perform fee charging on the charging request.

In some embodiments, the ABMF network element 53 is configured to store an account balance of user account information.

In some embodiments, the URF network element 54 is configured to route a charging result to each charging device in a charging device cluster, to ensure that user account information in each charging device in the charging device cluster is synchronized.

It may be understood that both a charging device in a home area and a charging device in a visited area update and synchronize user account information each time after performing network charging. Therefore, when a charging device that is in the visited area or the home area and that is configured to perform network charging has a fault and cannot perform network charging, a charging trigger device in the visited area or a charging trigger device in the home area may route a charging request to a charging device in the home area or a charging device in the visited area for network charging, to improve network charging feasibility, and ensure that a terminal device implements a data service.

FIG. 5B is a diagram of a module of a charging system 50 according to some embodiments of this application. As shown in FIG. 5B, the charging system 50 includes an information storage module 501, a charging processing module 502, and an information synchronization module 503.

In some embodiments, the information storage module 501 is configured to store user account information. For example, the information storage module 501 includes an ABMF network element, and the ABMF network element is configured to store an account balance of the user account information.

In some embodiments, the charging processing module 502 is configured to perform charging processing based on the user account information and service usage information. For example, the charging processing module 502 includes an RF network element, and the RF network element is configured to receive charging event details provided by a CHF network element, determine charging information such as the service usage information and user identification information, and perform fee charging on a charging request.

In some embodiments, the information synchronization module 503 is configured to perform information synchronization with each charging device included in a charging device cluster. For example, the information synchronization module 503 includes a URF network element, and the URF network element is configured to route a charging result to each charging device in the charging device cluster, to ensure that user account information in each charging device in the charging device cluster is synchronized.

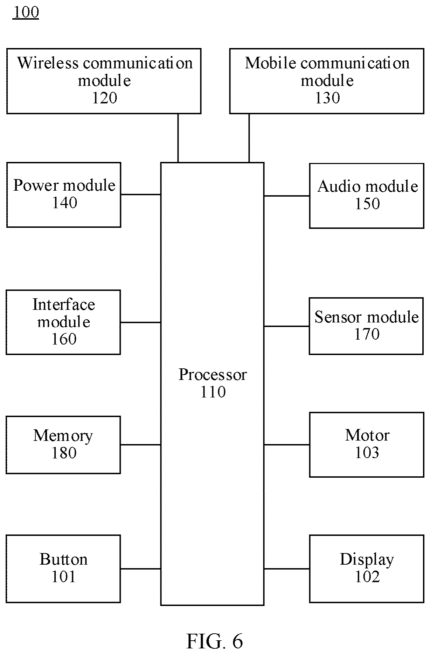

FIG. 6 is a diagram of a structure of a mobile phone 100 according to some embodiments of this application. As shown in FIG. 6, the mobile phone 100 includes a processor 110, a power module 140, a memory 180, a mobile communication module 130, a wireless communication module 120, a sensor module 170, an audio module 150, an interface module 160, a button 101, a display 102, a motor 103, and the like.

It may be understood that the structure shown in this embodiment constitutes no specific limitation on the mobile phone 100. In some other embodiments of this application, the mobile phone 100 may include more or fewer components than those shown in the figure, or some components may be combined, or some components may be split, or components may be arranged in different manners. The components shown in the figure may be implemented by hardware, software, or a combination of software and hardware.

The processor 110 may include one or more processing units, for example, may include a processing module or a processing circuit of a central processing unit (central processing Unit, CPU), a graphics processing unit (graphics processing unit, GPU), a digital signal processor DSP, a micro-programmed control unit (micro-programmed control unit, MCU), an artificial intelligence (artificial intelligence, AI) processor, a field programmable logic device (field programmable gate array, FPGA), or the like. Different processing units may be independent components, or may be integrated into one or more processors. A storage unit may be disposed in the processor 110, to store instructions and data. In some embodiments, the storage unit in the processor 110 is a cache 180.

The power module 140 may include a power supply, a power management component, and the like. The power supply may be a battery. The power management component is configured to manage charging of the power supply and power supplying of the power supply to another module. In some embodiments, the power management component includes a charging management module and a power management module. The charging management module is configured to receive charging input from a charger. The power management module is configured to connect the power supply, the charging management module, and the processor 110. The power management module receives input from the power supply and/or the charging management module, and supplies power to the processor 110, the display 102, the wireless communication module 120, and the like.

The mobile communication module 130 may include but is not limited to an antenna, a power amplifier, a filter, a low noise amplifier (low noise amplifier, LNA), and the like. The mobile communication module 130 may provide a wireless communication solution that is applied to the mobile phone 100 and that includes 2G/3G/4G/5G or the like. The mobile communication module 130 may receive an electromagnetic wave through the antenna, perform processing such as filtering or amplification on the received electromagnetic wave, and transmit the electromagnetic wave to a modem processor for demodulation. The mobile communication module 130 may further amplify a signal modulated by the modem processor, and convert the signal into an electromagnetic wave for radiation through the antenna. In some embodiments, at least some functional modules of the mobile communication module 130 may be disposed in the processor 110. In some embodiments, at least some functional modules of the mobile communication module 130 and at least some modules of the processor 110 may be disposed in a same component.

The wireless communication module 120 may include an antenna, and receive and transmit an electromagnetic wave through the antenna. The wireless communication module 120 may provide a wireless communication solution that is applied to the mobile phone 100 and that includes a wireless local area network (wireless local area network, WLAN) (for example, a wireless fidelity (wireless fidelity, Wi-Fi) network), a Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The mobile phone 100 may communicate with a network and another device by using a wireless communication technology.

In some embodiments, the mobile communication module 130 and the wireless communication module 120 of the mobile phone 100 may alternatively be located in a same module.

The display 102 is configured to display a human-computer interaction interface, an image, a video, and the like. The display 102 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flexible light-emitting diode, FLED), a quantum dot light emitting diode (quantum dot light emitting diode, QLED), or the like.

The sensor module 170 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 150 is configured to convert digital audio information into an analog audio signal for output, or convert analog audio input into a digital audio signal. The audio module 150 may be further configured to encode and decode an audio signal. In some embodiments, the audio module 150 may be disposed in the processor 110, or some functional modules of the audio module 150 are disposed in the processor 110. In some embodiments, the audio module 150 may include a speaker, a receiver, a microphone, and a headset jack.

The interface module 160 includes an external memory interface, a universal serial bus (universal serial bus, USB) interface, a SIM card interface, and the like. The external memory interface may be configured to connect to an external memory card, for example, a micro SD card, to expand a storage capability of the mobile phone 100. The external memory card communicates with the processor 110 through the external memory interface, to implement a data storage function. The universal serial bus interface is configured for communication between the mobile phone 100 and another device. The subscriber identity module card interface is configured to communicate with a SIM card installed into the mobile phone 10010, for example, read a phone number stored in the SIM card, or write a phone number into the SIM card.

In some embodiments, the mobile phone 100 further includes the button 101, the motor 103, an indicator, and the like. The button 101 may include a volume button, a power-on/power-off button, and the like. The motor 103 is configured to enable the mobile phone 100 to generate a vibration effect, for example, generate vibration when the mobile phone 100 of a user is called, to prompt the user to answer an incoming call of the mobile phone 100. The indicator may include a laser indicator, a radio frequency indicator, a light-emitting diode (light-emitting diode, LED) indicator, and the like.

In the accompanying drawings, some structural or method features may be shown in a particular arrangement and/or order. However, it should be understood that such a particular arrangement and/or order may not be needed. In some embodiments, these features may be arranged in a manner and/or an order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that in the examples and specification of this patent, relational terms such as first and second are only used to distinguish one entity or operation from another, and do not necessarily require or imply that any actual relationship or sequence exists between these entities or operations. In addition, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some example embodiments of this application, a person of ordinary skill in the art should understand that various changes may be made to this application in form and detail without departing from the scope of this application.

## Claims

1. A charging method, wherein the method comprises:
sending, by a first charging trigger device, a charging request to a first charging device, wherein the charging request carries user identification information and service usage information, and the first charging trigger device and the first charging device are located in a visited area of a user;
obtaining, by the first charging device in response to the charging request, corresponding user account information based on the user identification information, wherein the user account information in the first charging device is synchronized with user account information stored in a second charging device, and the second charging device is located in a home area of the user; and
performing, by the first charging device, charging processing based on the obtained user account information and the service usage information.

2. The method according to claim 1, wherein the method further comprises:
determining, by a customer relationship management device, the user identification information and the user account information of the user;
determining, by the customer relationship management device based on the user identification information, the home area and the visited area that correspond to the user;
sending, by the customer relationship management device, the user account information to the second charging device based on an area identifier of the home area; and
copying, by the second charging device, the user account information, and sending the user account information to the first charging device.

3. The method according to claim 2, wherein the determining, by the customer relationship management device based on the user identification information, the home area and the visited area that correspond to the user comprises:
determining, by the customer relationship management device, at least one second charging device based on the area identifier of the home area;
determining, by the customer relationship management device, at least one first charging device based on an area identifier of the visited area; and
generating, by the customer relationship management device, a charging device cluster based on the at least one second charging device and the at least one first charging device, wherein user account information in each charging device in the charging device cluster is synchronized.

4. The method according to claim 3, wherein the performing, by the first charging device, charging processing based on the obtained user account information and the service usage information comprises:
updating, by the first charging device, the user account information in the first charging device based on a charging result of the charging processing; and
copying, by the first charging device, updated user account information, and sending the updated user account information to a second charging device in the charging device cluster.

5. The method according to any one of claims 2 to 4, wherein the sending, by a first charging trigger device, a charging request to a first charging device comprises:
receiving, by the first charging trigger device, a first service request from the user located in the visited area, and determining the first charging device based on the area identifier of the visited area; and
sending, by the first charging trigger device, the charging request to the first charging device in response to the first service request.

6. The method according to claim 5, wherein the performing, by the first charging device, charging processing based on the obtained user account information and the service usage information comprises:
sending, by the first charging device, the charging result of the charging processing to the first charging trigger device; and
determining, by the first charging trigger device based on the charging result, a service processing manner corresponding to the first service request.

7. The method according to any one of claims 2 to 4, wherein the sending, by a first charging trigger device, a charging request to a first charging device comprises:
receiving, by a second charging trigger device, a second service request from the user located in the home area, and determining the second charging device based on the area identifier of the home area, wherein the second charging trigger device is located in the home area;
corresponding to a case in which the second charging device does not meet a charging condition, determining, by the second charging trigger device, the visited area of the user, and determining the first charging trigger device and the first charging device based on the area identifier of the visited area;
sending, by the second charging trigger device, the second service request to the first charging trigger device; and
sending, by the first charging trigger device, the charging request to the first charging device in response to the second service request.

8. A charging method, wherein the method comprises:
receiving, by a first charging device, a charging request sent by a first charging trigger device, wherein the charging request carries user identification information and service usage information, and the first charging trigger device and the first charging device are located in a visited area of a user;
obtaining, by the first charging device in response to the charging request, corresponding user account information based on the user identification information, wherein the user account information in the first charging device is synchronized with user account information stored in a second charging device, and the second charging device is located in a home area of the user; and
performing, by the first charging device, charging processing based on the obtained user account information and the service usage information.

9. The method according to claim 8, wherein the performing, by the first charging device, charging processing based on the obtained user account information and the service usage information comprises:
updating, by the first charging device, the user account information in the first charging device based on a charging result of the charging processing; and
copying, by the first charging device, updated user account information, and sending the updated user account information to the second charging device.

10. The method according to claim 8, wherein the method further comprises:
sending, by the first charging device, a charging result of the charging processing to the first charging trigger device.

11. A charging method, wherein the method comprises:
receiving, by a first charging trigger device, a first service request from a user located in a visited area, and determining a first charging device based on an area identifier of the visited area, wherein the first charging trigger device and the first charging device are located in the visited area of the user; and
sending, by the first charging trigger device, a charging request to the first charging device in response to the first service request.

12. The method according to claim 11, wherein the method further comprises:
receiving, by the first charging trigger device from the first charging device, a charging result corresponding to the charging request; and
determining, by the first charging trigger device based on the charging result, a service processing manner corresponding to the first service request.

13. A charging method, wherein the method comprises:
receiving, by a second charging trigger device, a second service request from a user located in a home area, and determining a second charging device based on an area identifier of the home area, wherein the second charging trigger device and the second charging device are located in the home area;
corresponding to a case in which the second charging device does not meet a charging condition, determining, by the second charging trigger device, a visited area of the user, and determining a first charging trigger device and a first charging device based on an area identifier of the visited area, wherein the first charging trigger device and the first charging device are located in the visited area of the user; and
sending, by the second charging trigger device, the second service request to the first charging trigger device, to trigger the first charging trigger device to send the charging request to the first charging device.

14. A charging management method, wherein the method comprises:
determining, by a customer relationship management device, user identification information and user account information of a user;
determining, by the customer relationship management device based on the user identification information, a home area and a visited area that correspond to the user;
determining, by the customer relationship management device, at least one second charging device based on an area identifier of the home area, wherein the second charging device is located in the home area;
determining, by the customer relationship management device, at least one first charging device based on an area identifier of the visited area, wherein the first charging device is located in the visited area;
generating, by the customer relationship management device, a charging device cluster based on the at least one second charging device and the at least one first charging device; and
sending, by the customer relationship management device, the user account information to at least one charging device in the charging device cluster, wherein user account information in each charging device in the charging device cluster is synchronized.

15. A charging system, used in the method according to any one of claims 1 to 14, wherein the system comprises:
an information storage module, configured to store the user account information;
a charging processing module, configured to perform charging processing based on the user account information and the service usage information; and
an information synchronization module, configured to perform information synchronization with each charging device comprised in the charging device cluster.

16. A computer-readable storage medium, wherein the readable storage medium stores instructions, and when the instructions are executed on a device, the device is enabled to implement the method according to any one of claims 1 to 14.

17. A device, comprising:
a memory, configured to store instructions executed by one or more processors of the device; and
a processor, wherein the processor is one of the processors of the device and is configured to execute the instructions stored in the memory to implement the method according to any one of claims 1 to 14.
